(19) Europäisches Patentamt
European Patent Office
Office européen des brevets

(11) **EP 4 194 126 A1**

(12) **DEMANDE DE BREVET EUROPEEN**

(43) Date de publication:
**14.06.2023 Bulletin 2023/24**

(21) Numéro de dépôt: **22211435.7**

(22) Date de dépôt: **05.12.2022**

(51) Classification Internationale des Brevets (IPC):
**B22F 10/28** (2021.01)   **B22F 10/31** (2021.01)
**B22F 10/36** (2021.01)   **B22F 10/368** (2021.01)
**B22F 10/38** (2021.01)   **B22F 10/85** (2021.01)
**B29C 64/135** (2017.01)   **B33Y 10/00** (2015.01)
**B33Y 80/00** (2015.01)   **F16F 7/12** (2006.01)

(52) Classification Coopérative des Brevets (CPC):
**B22F 10/28; B22F 10/31; B22F 10/36;
B22F 10/368; B22F 10/38; B22F 10/85;
B29C 64/135; B33Y 10/00; B33Y 80/00;
F16F 7/121**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **08.12.2021 FR 2113176**

(71) Demandeur: **Commissariat à l'énergie atomique
et aux énergies alternatives**
**75015 Paris (FR)**

(72) Inventeurs:
• **Maskrot, Hicham**
  **91310 MONTLHERY (FR)**
• **Hercher, Olivier**
  **91640 FONTENAY LES BRIIS (FR)**

(74) Mandataire: **Cabinet Nony**
**11 rue Saint-Georges**
**75009 Paris (FR)**

(54) **PIECE COMPORTANT UNE STRUCTURE POREUSE ET SON PROCEDE DE FABRICATION**

(57)   Pièce (10) comportant une structure poreuse (15) comportant des pores cellulaires (20) et formée au moins en partie par la répétition périodique d'un motif élémentaire (50), chaque pore cellulaire étant délimité par une paroi (30), en un matériau métallique ou polymère, ayant une porosité pariétale supérieure à 5 % et comportant des pores pariétaux (31) dont la taille moyenne est inférieure à la taille moyenne des pores cellulaires.

[Fig 1]

EP 4 194 126 A1

## Description

### Domaine technique

La présente invention concerne le domaine des structures poreuses comportant des pores cellulaires, notamment destinées à former tout ou partie d'un dispositif amortisseur de choc.

### Technique antérieure

Afin d'absorber l'énergie d'un choc, un dispositif amortisseur de choc peut se présenter sous la forme d'une structure cellulaire métallique ou polymérique. Une telle structure cellulaire présente une haute porosité qui lui confère à la fois une légèreté et de bonnes performances mécaniques, notamment une aptitude à dissiper de l'énergie par une déformation plastique suffisante en compression pour absorber l'énergie d'un choc.

Un dispositif amortisseur de choc peut être fabriqué par fonderie, notamment par moulage. Cependant, la fonderie est énergivore et rend difficile, voire impossible, l'obtention de pores cellulaires d'une taille inférieure à 14 mm. Il est aussi connu de fabriquer un tel dispositif par fabrication additive, ce qui permet simplement l'obtention de formes spécifiques et complexes ainsi que de pores cellulaires de faible taille.

FR 3 033 518 A1 décrit par exemple une pièce en métal ou en alliage comprenant des alvéoles, pouvant être réalisée par fonderie ou par fabrication additive.

Il existe un besoin, notamment dans le domaine automobile, pour alléger un tel dispositif amortisseur de choc, en particulier dans une recherche permanente de réduction de la consommation énergétique d'un véhicule.

### Exposé de l'invention

L'invention concerne une pièce comportant une structure poreuse comportant des pores cellulaires et formée au moins en partie par la répétition périodique d'un motif élémentaire, chaque pore cellulaire étant délimité par une paroi, en un matériau métallique ou polymère, ayant une porosité pariétale supérieure à 5 % et comportant des pores pariétaux dont la taille moyenne est inférieure à la taille moyenne des pores cellulaires.

Par rapport à une pièce présentant une structure de pores cellulaires identique dans laquelle les pores cellulaires sont chacun délimités par une paroi dense, la pièce selon l'invention est avantageusement plus légère.

La « porosité pariétale » est égale au rapport du volume occupé par les pores pariétaux sur le volume occupé par les parois de la structure poreuse. Le volume occupé par les parois de la structure poreuse est égal à la somme du volume du matériau formant les pores pariétaux et du volume occupé par les pores pariétaux. Les « pores pariétaux » sont les pores contenus dans les parois.

La « porosité cellulaire » correspond au rapport du volume occupé par les pores cellulaires, sur le volume occupé par la structure poreuse. Le volume occupé par la structure poreuse est égal à la somme du volume occupé par les parois et le volume occupé par les pores cellulaires.

La porosité totale de la structure poreuse correspond à la somme de la porosité cellulaire et de la porosité pariétale.

Un pore « ouvert » est délimité par une paroi creuse. Un pore ouvert est ainsi en communication de fluide avec un autre pore ouvert qui lui est adjacent.

La taille « moyenne » d'une population de pores est la moyenne arithmétique des tailles de la population de pores.

La « taille » d'un pore, qu'il soit cellulaire ou pariétal, peut être déterminée par la méthode suivante. La pièce peut d'abord être infiltrée avec une résine. Une tranche de la pièce à analyser est découpée puis polie afin d'obtenir un bon état de surface, ledit polissage étant effectué avec un papier de polissage aux grains de faible taille au minimum de grade 1200, de préférence avec une pâte diamantée. Des clichés de la tranche polie sont réalisés à l'aide d'un microscope optique ou d'un microscope électronique. Le grandissement utilisé est tel que la largeur de l'image soit comprise entre 5 fois et 10 fois la taille moyenne des pores. Un premier cliché peut être réalisé grâce à une estimation visuelle de la taille moyenne des pores. La taille des pores est déterminée par analyse des clichés selon une méthode de seuillage suivie par une érosion/dilatation utilisée par exemple par un logiciel d'analyse d'image tel que le logiciel ZEN CORE 2$^©$ commercialisé par la société Zeiss$^©$. La « taille » d'un pore correspond, sur l'image, au diamètre du plus petit cercle circonscrit audit pore.

La taille moyenne des pores pariétaux peut être acquise sur une image représentant une section transverse d'une ou plusieurs parois. La taille moyenne des pores cellulaires peut être acquise sur une image représentant une section transverse de la structure cellulaire. Bien évidemment, pour mesurer la taille moyenne des pores cellulaires, une image est acquise à plus faible grandissement que pour mesurer la taille moyenne des pores pariétaux.

La méthode décrite permet également d'accéder par sommation à la porosité cellulaire et/ou à la porosité pariétale. La porosité cellulaire correspond, sur l'image, au rapport de la somme des aires occupées par les pores cellulaires sur l'aire de la section de la structure poreuse représentée sur l'image. La porosité pariétale correspond, sur l'image, au rapport de la somme des aires occupées par les pores pariétaux sur l'aire totale occupée par les parois.

La porosité pariétale peut être comprise entre 5 % et 80 %, en particulier entre 20 % et 60 %.

La taille moyenne des pores pariétaux peut être inférieure à 500 $\mu$m, avec de préférence au moins 85 % des pores pariétaux ayant une taille inférieure à 200 $\mu$m

et de préférence plus de 50 % des pores pariétaux ayant une taille inférieure à 50 $\mu$m.

Les pores pariétaux peuvent être distribués de manière irrégulière, et notamment aléatoirement, au sein des parois. Ils peuvent être distribués dans les parois de manière homogène. Par exemple, la porosité pariétale ne varie pas de plus de 20%, voire de 10%, voire de 5%, entre deux zones distinctes de volume égale à 3 fois le cube de l'épaisseur d'une des parois.

Les pores pariétaux peuvent avoir une forme irrégulière, notamment non sphérique.

Les parois peuvent être pleines, c'est-à-dire qu'elles sont exemptes d'au moins un pore pariétal qui la traverse dans son épaisseur.

En variante, les parois sont creuses. Une paroi creuse comporte au moins un évidement la traversant de part en part dans son épaisseur.

Les parois peuvent présenter une forme d'un treillis. Elles peuvent notamment être sous la forme d'un assemblage polyédrique de barres qui délimitent un des évidements.

La structure poreuse peut comporter des parois pleines et des parois creuses.

Des portions d'au moins une des parois peuvent délimiter plusieurs pores cellulaires adjacents. Les parois peuvent comporter plusieurs faces planes ou courbes.

Les parois peuvent séparer au moins deux pores cellulaires adjacents, notamment plus de deux pores cellulaires adjacents.

L'épaisseur d'au moins une des parois, voire de chaque paroi, peut être d'au moins 200 $\mu$m, de préférence d'au moins 800 $\mu$m voire d'au moins 1 mm. L'épaisseur d'une paroi est la plus petite distance entre deux faces opposées de la paroi.

La structure poreuse peut comporter des pores cellulaires ouverts. Plus de 90 %, de préférence plus de 95 %, en nombre des pores cellulaires peuvent être ouverts, voire tous les pores cellulaires peuvent être ouverts.

La taille moyenne des pores cellulaires peut être supérieure à 100 $\mu$m, de préférence supérieure à 500 $\mu$m, voire supérieure à 1 mm. Elle peut être inférieure à 14 mm, voire inférieure à 10 mm.

La taille moyenne des pores cellulaires peut être au moins 20 fois plus grande, de préférence au moins 50 fois plus grande, voire au moins 100 fois plus grande que la taille moyenne des pores pariétaux.

La porosité cellulaire peut être supérieure à 70 %, de préférence supérieure à 80 %, voire supérieure à 90 %, mieux supérieure à 95%. Elle peut être inférieure à 97 %, par exemple égale à 96%.

La structure poreuse est formée au moins en partie, voire en totalité, par la répétition périodique d'un motif élémentaire.

Le motif élémentaire peut être répété périodiquement selon un axe, voire deux axes ou de préférence trois axes différents les uns des autres, et de préférence orthogonaux les uns aux autres. Le motif élémentaire peut être répété plus de cinq fois, voire plus de dix fois, voire plus de cinquante fois selon chaque axe, notamment en fonction de l'application à laquelle la pièce est destinée.

Le motif élémentaire peut comporter, voire être constitué par un pore cellulaire et, au moins en partie, par la paroi qui délimite ledit pore cellulaire. Le motif élémentaire peut comporter un ou plusieurs pores cellulaires. En variante, un pore cellulaire peut être défini par la répétition, au moins deux fois, du motif élémentaire.

Le motif élémentaire peut présenter une forme convexe ou concave ou en étoile. En particulier, le motif élémentaire peut être un treillis, notamment convexe et/ou en étoile. Le motif élémentaire peut être toute forme accessible par fabrication additive dont la répétition permet de former des pores cellulaires.

De préférence, la structure poreuse est en un matériau métallique.

La structure poreuse peut comprendre, notamment pour plus de 95 % de sa masse, notamment pour plus de 99,0 % de sa masse, voire pour plus de 99,9 % de sa masse, un métal choisi parmi l'aluminium, le nickel, le cobalt, le fer, le cuivre, le palladium, le titane, le tungstène, l'argent, le platine et leurs alliages. En particulier, la structure poreuse peut être en un acier inoxydable ou en un alliage à mémoire de forme, notamment en un alliage de nickel et de titane, par exemple en nitinol. De préférence, la structure poreuse est en un acier inoxydable.

En variante, la structure poreuse peut comprendre, notamment pour plus de 80 % de sa masse, voire pour plus de 90 % de sa masse, un polymère choisi parmi les polyamides, les polystyrènes, les élastomères thermoplastiques, les polyaryléthercétones et leurs mélanges, de préférence parmi les polyamides, notamment un nylon tel que le nylon PA12, le nylon PA11 ou le nylon PEBA. Elle peut comprendre des fibres de verre, des billes de verre, de la poudre d'aluminium et leurs mélanges.

L'invention concerne encore un dispositif amortisseur de choc formé, au moins en partie, d'une pièce selon l'invention, par exemple pour la protection d'objets, notamment pour leur chute ou leur transport.

L'invention concerne aussi un dispositif comportant une pièce selon l'invention, le dispositif étant choisi parmi un véhicule, notamment automobile ou ferroviaire, un réservoir poreux, une cale et un absorbeur acoustique.

L'invention concerne encore un procédé de fabrication d'une pièce selon l'invention, le procédé comportant la production de la structure poreuse par mise en forme d'une poudre au moyen d'une technique de fabrication additive.

De préférence, la technique de fabrication additive est une technique de fabrication additive sur lit de poudre.

De préférence, la technique de fabrication additive met en œuvre une fusion partielle ou complète des particules de la poudre au moyen d'un faisceau lumineux ou d'électrons, en particulier d'un faisceau lumineux. De préférence, le faisceau lumineux est un faisceau laser.

De nombreuses techniques de fabrication additive sur lit de poudre connues de l'homme du métier peuvent être utilisées. En particulier, la technique de fabrication additive peut être choisie parmi les techniques d'impression 3D, notamment choisie parmi :

- l'impression par projection de liant sur lit de poudre, connue sous le nom anglais de « Binder Jetting »,
- la fusion laser sur lit de poudre dénommée « LPBF » ou « SLM », acronyme anglais de « Laser Powder Bed Fusion » et de « Selective Laser Melting » respectivement,
- le frittage sélectif par laser dénommé « SLS », acronyme anglais de « Selective Laser Sintering »,
- la fusion par faisceau d'électrons dénommée « EBM », acronyme anglais de « Electron Beam Melting », et
- la projection de liant sur lit de poudre « MJF », acronyme anglais de « Multi Jet Fusion ».

De préférence, la technique de fabrication additive est la fusion laser sur lit de poudre (LPBF) ou le frittage sélectif par laser (SLS), plus préférentiellement la fusion laser sur lit de poudre (LPBF). La fusion laser sur lit de poudre (LPBF) est de préférence mise en œuvre pour former une structure poreuse métallique. Le frittage sélectif par laser (SLS) est de préférence mis en œuvre pour former une structure poreuse polymérique.

La technique de fabrication additive par fusion laser sur lit de poudre comprend le dépôt d'au moins une couche de poudre puis la fusion partielle ou complète d'au moins une partie des particules de la poudre, de préférence de l'ensemble des particules de la couche déposée par un apport sélectif d'énergie sous l'action d'un faisceau laser.

Le diamètre des particules médian de la poudre $D_{50}$ peut être compris entre 1 $\mu$m et 100 $\mu$m, de préférence entre 1 $\mu$m et 80 $\mu$m, par exemple entre 5 $\mu$m et 45 $\mu$m. La taille des pores pariétaux peut ainsi être aisément contrôlée.

Les particules peuvent comprendre, notamment pour plus de 95,0 % de leur masse, notamment pour plus de 99,0 % de leur masse, voire pour plus de 99,9 % de leur masse, un métal choisi parmi l'aluminium, le nickel, le cobalt, le fer, le cuivre, le palladium, le titane, le tungstène, l'argent, le platine et leurs alliages, notamment un acier inoxydable ou en un alliage à mémoire de forme.

Les particules peuvent comprendre, notamment pour plus de 80 % de sa masse, voire pour plus de 90 % de sa masse, un polymère choisi parmi les polyamides, les polystyrènes, les élastomères thermoplastiques et les polyaryléthercétones et leurs mélanges, de préférence parmi les polyamides, notamment un nylon tel que le nylon PA12, le nylon PA11 ou le nylon PEBA.

La poudre peut être monodisperse.

La technique de fabrication additive peut comprendre la répétition, notamment plus de dix fois, voire plus de mille fois, d'un cycle comportant le dépôt d'une couche de poudre d'une épaisseur comprise entre 6 $\mu$m et 200 $\mu$m, de préférence comprise entre 10 $\mu$m et 120 $\mu$m et l'irradiation d'au moins une partie de la couche par le faisceau lumineux, de préférence un faisceau laser. En variante, le cycle comporte par exemple le dépôt d'une couche de poudre d'une épaisseur comprise entre 1 $\mu$m et 80 $\mu$m.

L'étape de fabrication additive peut comporter le dépôt d'une couche initiale de poudre sur un plateau de fabrication, en particulier chauffé à une température comprise entre 20 °C et 250 °C, notamment comprise entre 190 °C et 210 °C.

La fusion des particules de la poudre peut être commandée à l'aide d'une base de données informatique préétablie. La base de données informatique commande à chaque étape, au moyen de l'exécution d'un programme d'ordinateur par un processeur, un déplacement spatial du faisceau lumineux par rapport à la poudre déposée. La base de données informatique peut contrôler :

- la géométrie de la structure poreuse, et notamment des parois délimitant les pores cellulaires, en commandant la trajectoire du faisceau lumineux ; et
- la porosité des parois, en sélectionnant des paramètres adaptés de conduite de la technique de fabrication additive, et notamment en commandant la densité d'énergie du faisceau lumineux.

La fusion sélective de la poudre est contrôlée par la sélection de paramètres de pilotage de la technique de fabrication additive principaux, notamment choisis parmi la vitesse de déplacement du faisceau lumineux (V), la puissance du faisceau lumineux (P), la valeur de décalage entre les vecteurs de déplacement du faisceau lumineux (HD), l'écart entre deux cordons lasés (HD) et la rotation des cordons d'une couche à l'autre.

De préférence, au moins un des paramètres de pilotage de la fabrication additive est choisi de manière à coalescer partiellement les particules pour les lier entre elles. Une coalescence partielle permet de conserver une partie de la porosité de la poudre et de former des parois poreuses. La mise en œuvre de la technique de fabrication additive est ainsi différente de la pratique de l'art antérieur selon laquelle une fusion la plus complète possible des particules est généralement recherchée pour former une paroi métallique dense.

La porosité pariétale peut être ajustée en adaptant la densité d'énergie de faisceau lumineux. En dessous d'une densité d'énergie seuil, la porosité pariétale augmente avec une diminution de la densité d'énergie. La « densité d'énergie seuil » est la densité d'énergie au-dessus de laquelle une structure poreuse aux parois denses est obtenue. Une structure « poreuse aux parois dense » présente une porosité pariétale inférieure à 0,5%.

La densité d'énergie volumique E, exprimée en J/mm³, est définie par la formule mathématique suivante :

[Math 1]

$$E = \frac{P}{V.HD.e}$$

dans laquelle :

- $P$ est la puissance de faisceau lumineux, notamment de faisceau laser, exprimée en W,
- $V$ est la vitesse de déplacement du faisceau lumineux, notamment laser, exprimée en mm/s,
- $HD$ est la valeur de décalage entre les vecteurs de déplacement du faisceau lumineux, notamment entre deux cordons lasés, exprimée en mm, et
- $e$ est l'épaisseur de couche, exprimée en mm.

De préférence, le rapport de la densité d'énergie du faisceau lumineux sur la densité d'énergie seuil est compris entre 0,3 et 0,9.

La vitesse de déplacement du faisceau est la vitesse relative du point formé par le faisceau lumineux sur la couche de poudre, relativement à ladite couche. Pour une puissance P du faisceau lumineux, une valeur de décalage HD et une épaisseur de couche e constantes, au-dessus d'une vitesse de déplacement seuil, la porosité pariétale de la structure cellulaire poreuse augmente, avec une augmentation de la vitesse de déplacement. La « vitesse de déplacement seuil » est la vitesse de déplacement en dessous de laquelle une structure poreuse aux parois denses est obtenue, pour une puissance P du faisceau lumineux, une valeur de décalage HD et une épaisseur de couche e constantes. La vitesse de déplacement du faisceau lumineux peut être inférieure à 6000 mm/s. Une vitesse de déplacement élevée pouvant être mise en œuvre, la fabrication de la pièce selon l'invention est également plus rapide que celle des pièces métalliques cellulaires à parois denses obtenues par un procédé de fabrication additive de l'art antérieur.

Par exemple, pour une puissance de faisceau lumineux de 275 W, une épaisseur de couche de 50 μm, une valeur de décalage entre les vecteurs de déplacement du faisceau lumineux comprise entre 80 et 120 μm et une poudre d'acier inoxydable ayant un diamètre médian de 36 μm, la vitesse de déplacement du faisceau lumineux est comprise entre 1500 et 6000 mm/s.

La trajectoire adoptée par le faisceau lumineux suit des vecteurs de déplacement décalés spatialement deux à deux suivant une valeur de décalage HD.

L'homme du métier sait ajuster la porosité pariétale au sein de la structure poreuse, pour une puissance de faisceau lumineux, une vitesse de déplacement du faisceau lumineux et une épaisseur de couche prédéterminées, en adaptant ladite valeur de décalage. Par exemple, dans ces conditions, la porosité pariétale augmente avec une augmentation de la valeur de décalage.

L'épaisseur de la couche de poudre déposée permet également d'ajuster la porosité pariétale. Pour une puissance de faisceau lumineux, une valeur de décalage et une vitesse de déplacement prédéterminées, la porosité pariétale augmente avec une augmentation de l'épaisseur de la couche.

Dans un mode de mise en œuvre, préalablement à la production de la structure poreuse, le procédé peut comporter :

i) la fabrication d'au moins une structure test avec des puissances de faisceau lumineux respectives différentes, afin de déterminer la densité d'énergie seuil $E_{seuil}$, la vitesse de déplacement $V_0$ du faisceau lumineux, la valeur de décalage $HD_0$ du faisceau lumineux et l'épaisseur de couche $e_0$ ayant été prédéterminées et maintenues constantes au cours de la fabrication de ladite au moins une structure test,

ii) sélectionner au moins un paramètre choisi parmi la vitesse de déplacement du faisceau lumineux, la valeur de décalage du faisceau lumineux et l'épaisseur de couche pour que la densité d'énergie du faisceau lumineux au cours de l'étape ultérieure de fabrication soit inférieure à $E_{seuil}$.

Les paramètres décrits précédemment peuvent être ajustés selon la composition de la poudre mise en œuvre.

## Brève description des dessins

L'invention pourra être mieux comprise à la lecture de la description détaillée qui va suivre de l'exemple et du dessin annexé dans lequel :

[Fig 1] la figure 1 comporte une photographie d'un exemple de pièce selon l'invention, ainsi qu'une photographie par microscopie optique d'une paroi de la pièce,

[Fig 2] la figure 2 représente schématiquement différents exemples de motif élémentaire pour former par répétition une structure poreuse selon l'invention et

[Fig 3] la figure 3 illustre schématiquement un exemple de mise en œuvre d'un procédé de fabrication additive sur lit de poudre au moyen d'un faisceau laser (A), dans une configuration sans (B) et avec (C) chevauchement.

## Description détaillée

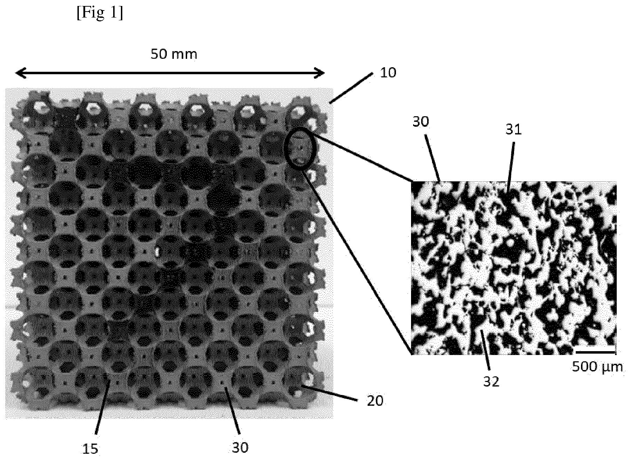

Un exemple de pièce 10 selon l'invention est représentée sur la figure 1.

La pièce est de forme cubique de dimension

$50 \times 50 \times 50$ mm³. Elle comporte une structure poreuse 15 comportant des pores cellulaires 20 ouverts et des parois métalliques 30 qui délimitent chacune un ou plusieurs pores cellulaires et forment une cloison entre des pores cellulaires adjacents.

Les pores cellulaires 20 présentent une forme sensiblement sphérique dont le diamètre est de $5,6 \times 5,6$ mm². Ils sont disposés périodiquement selon trois axes orthogonaux.

Les parois 30 sont creuses, *i.e.* elles comportent des évidements qui les traversent de part en part dans leur épaisseur de sorte à relier fluidiquement des pores cellulaires adjacents.

Comme cela est illustré sur la photographie qui représente un agrandissement d'une paroi 30, une paroi 30 comporte des pores pariétaux 31 qui sont délimités par des zones métalliques denses 32.

Ainsi, la pièce présente une porosité cellulaire qui est formée par les pores cellulaires et une porosité pariétale qui est formée par les pores pariétaux.

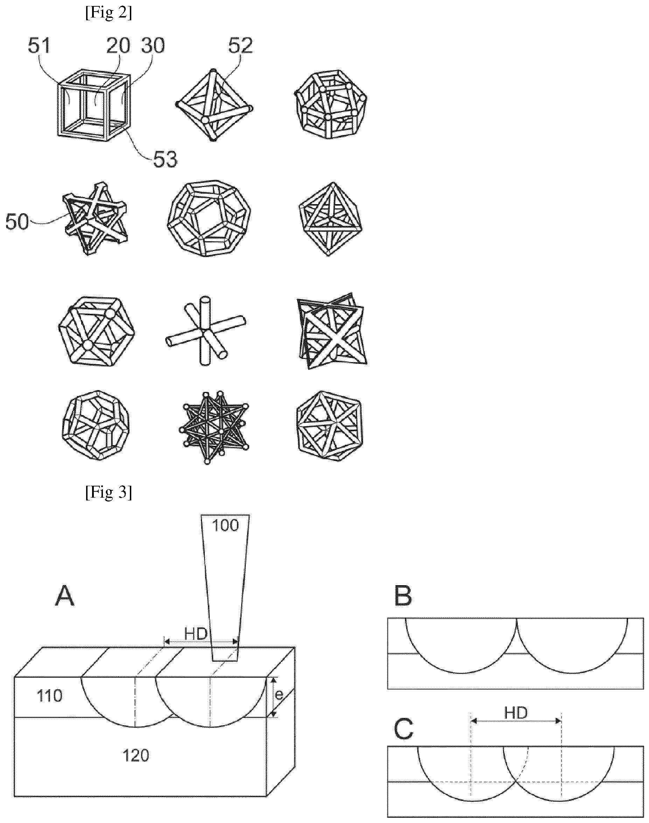

Sur la figure 2, on a illustré différents exemples de motifs élémentaires 50, qui par répétition périodique résultent en la formation d'une structure poreuse. Bien entendu, d'autres motifs élémentaires que ceux représentés peuvent résulter en la formation d'une structure poreuse.

Les motifs élémentaires présentent par exemple une forme de treillis, qui peut être de forme cubique, octaédrique, dodécaédrique, de gyrobicoupole octogonale, de cuboctaèdre, d'octaèdre tronqué, de grand icosaèdre et d'icosaèdre.

Un pore cellulaire peut être délimité par un motif élémentaire, par exemple cubique 51 ou octaédrique 52. Un tel pore cellulaire 20 est alors délimité par une paroi 30 comportant plusieurs faces, chaque face étant pourvue d'un évidement 53 traversant. La paroi d'un tel pore cellulaire présente alors la forme d'un treillis polyédrique.

En variante, un pore cellulaire peut être délimité par la répétition du motif élémentaire selon au moins une direction, comme c'est par l'exemple le cas du motif élémentaire en étoile illustré sur la figure 2.

La figure 3A illustre la trajectoire d'un faisceau laser 100 lors de la fabrication d'une structure poreuse par fabrication additive laser sur lit de poudre. Le spot du faisceau laser est déplacé selon des vecteurs de déplacement espacés d'une valeur de décalage *HD,* sur une couche de poudre 110 à fondre d'épaisseur e qui a été déposée sur des couches préalablement déposées et liées entre elles 120 sous l'effet du faisceau laser. Comme illustré sur les figures 3B et 3C, les zones impactées par le faisceau laser, et donc partiellement fusionnées s'étend sur l'intégralité de l'épaisseur de la couche à fondre ainsi que sur une portion de la couche inférieure sur laquelle la couche à fondre repose. Les zones impactées par le faisceau laser au cours de son déplacement peuvent être non chevauchées (figure 3B) ou en chevauchement partiel (figure 3C). Ainsi, une valeur de décalage HD peut éviter un chevauchement partiel des zones impactées et faciliter la formation d'une porosité pariétale. Par ailleurs, une vitesse de déplacement élevée du spot laser induit un échauffement local plus faible de la zone impactée par le faisceau laser, qui facilite une formation d'une porosité pariétale.

## Exemples

### Exemple 1

La pièce illustrée sur la figure 1 a été fabriquée de la façon suivante.

Une poudre de particules en acier inoxydable 316L, présentant un diamètre médian D50 de 36 $\mu$m a été utilisée dans une machine de fabrication additive de type LPBF commercialisée par SLM Solutions. La machine est équipée d'une source laser émettant à une longueur d'onde 1040 nm.

La pièce a été fabriquée avec la machine de fabrication additive sur un plateau de fabrication en inox 316L chauffé à une température de 200 °C avec les paramètres suivants :

-   épaisseur de la couche : 30 $\mu$m,
-   puissance du laser : 225 W,
-   vitesse de déplacement du faisceau laser : 4771 mm/s,
-   valeur de décalage : 100 $\mu$m,
-   densité d'énergie du faisceau laser : 15,71 J/mm³.

La mise en œuvre de ces paramètres de conduite spécifiques a permis l'obtention d'une structure poreuse présentant une porosité pariétale spécifique.

### Exemple 2

Une poudre d'acier inoxydable 316L, présentant un diamètre médian D50 de 36 $\mu$m a été utilisée dans une machine de LPBF commercialisée par SLM Solutions. La machine est équipée d'une source laser émettant à une longueur d'onde 1040 nm.

La pièce a été fabriquée avec la machine de fabrication additive sur un plateau de fabrication en inox 316L chauffé à une température de 200 °C avec les paramètres suivants :

-   épaisseur de la couche : 50 $\mu$m,
-   puissance du laser : 275 W,
-   vitesse de déplacement du faisceau laser : 3501 mm/s,
-   valeur de décalage : 120 $\mu$m.

La densité d'énergie du faisceau laser est inférieure à la densité d'énergie seuil. La structure poreuse présente une porosité cellulaire de 85 % et ses parois métalliques présentent une porosité pariétale de 35,7 %, mesurée par microscopie optique et traitement d'images. Ainsi, la porosité totale de la pièce est de 94,6%.

L'invention n'est bien évidemment pas limitée aux exemples de réalisation de la pièce et aux exemples de mise en œuvre du procédé, décrits à titre illustratif et non limitatif.

Par exemple, la pièce selon l'invention est un échangeur de chaleur, un corps de filtration ou une pièce de structure. Une telle pièce pourrait ainsi être mise en œuvre dans le domaine de la santé, de l'industrie minière, ou du bâtiment.

**Revendications**

1. Pièce (10) comportant une structure poreuse (15) comportant des pores cellulaires (20) et formée au moins en partie par la répétition périodique d'un motif élémentaire (50), chaque pore cellulaire étant délimité par une paroi (30), en un matériau métallique ou polymère, ayant une porosité pariétale supérieure à 5 % et comportant des pores pariétaux (31) dont la taille moyenne est inférieure à la taille moyenne des pores cellulaires.

2. Pièce selon la revendication 1, la taille moyenne des pores cellulaires étant au moins 20 fois plus grande, de préférence au moins 50 fois plus grande, voire au moins 100 fois plus grande que la taille moyenne des pores pariétaux.

3. Pièce selon l'une quelconque des revendications 1 et 2, la taille moyenne des pores pariétaux étant inférieure à 500 $\mu$m, avec de préférence au moins 85 % des pores pariétaux ayant une taille inférieure à 200 $\mu$m et de préférence plus de 50 % des pores pariétaux ayant une taille inférieure à 50 $\mu$m.

4. Pièce selon l'une quelconque des revendications précédentes, la structure poreuse étant en un matériau métallique.

5. Pièce selon l'une quelconque des revendications précédentes, la structure poreuse comprenant, notamment pour plus de 95 % de sa masse, un métal choisi parmi l'aluminium, le nickel, le cobalt, le fer, le cuivre, le palladium, le titane, le tungstène, l'argent, le platine et leurs alliages, la structure poreuse étant notamment en un acier inoxydable ou en un alliage à mémoire de forme, notamment en un alliage de nickel et de titane, par exemple en nitinol.

6. Pièce selon l'une quelconque des revendications précédentes, la porosité pariétale étant comprise entre 5 % et 80 %, en particulier entre 20 % et 60 %.

7. Pièce selon l'une quelconque des revendications précédentes, la porosité cellulaire étant supérieure à 70 %, de préférence supérieure à 80 %, voire supérieure à 90 %, mieux supérieure à 95% et/ou inférieure à 97 %.

8. Procédé de fabrication d'une pièce selon l'une quelconque des revendications précédentes, le procédé comportant la production de la structure poreuse par mise en forme d'une poudre au moyen d'une technique de fabrication additive.

9. Procédé selon la revendication précédente, la technique de fabrication additive étant une technique de fabrication additive sur lit de poudre.

10. Procédé selon la revendication précédente, la technique de fabrication additive mettant en œuvre une fusion partielle ou complète des particules de la poudre au moyen d'un faisceau lumineux ou un faisceau d'électrons, en particulier d'un faisceau lumineux, de préférence un faisceau laser, le rapport de la densité d'énergie du faisceau lumineux sur la densité d'énergie seuil étant en particulier compris entre 0,3 et 0,9, la densité d'énergie seuil étant la densité d'énergie au-dessus de laquelle une structure poreuse aux parois denses est obtenue.

11. Procédé selon l'une quelconque des revendications 8 à 10, le diamètre des particules médian de la poudre étant compris entre 1 $\mu$m et 100 $\mu$m, de préférence entre 1 $\mu$m et 80 $\mu$m.

12. Procédé l'une quelconque des revendications 10 à 11, la technique de fabrication additive comprenant la répétition, notamment plus de dix fois, voire plus de mille fois, d'un cycle comportant le dépôt d'une couche de la poudre d'une épaisseur (e) comprise entre 6 $\mu$m et 200 $\mu$m, de préférence comprise entre 10 $\mu$m et 120 $\mu$m, et l'irradiation d'au moins une partie de la couche par le faisceau lumineux, de préférence un faisceau laser.

13. Procédé selon l'une quelconque des revendications 10 à 12, comportant préalablement à la production de la structure poreuse :

   i) la fabrication d'au moins une structure test avec des puissances de faisceau lumineux respectives différentes, afin de déterminer la densité d'énergie seuil $E_{seuil}$ au-dessus de laquelle une structure poreuse aux parois denses est obtenue, la vitesse de déplacement $V_0$ du faisceau lumineux, la valeur de décalage $HD_0$ du faisceau lumineux et l'épaisseur de couche $e_0$ ayant été prédéterminées et maintenues constantes au cours de la fabrication de ladite au moins une structure test,

   ii) sélectionner au moins un paramètre choisi parmi la vitesse de déplacement du faisceau lumineux, la valeur de décalage du faisceau lumineux et l'épaisseur de couche pour que la densité d'énergie du faisceau lumineux au cours de l'étape ultérieure de fabrication soit inférieure à $E_{seuil}$.

**14.** Dispositif amortisseur de choc formé, au moins en partie, d'une pièce selon l'une quelconque des revendications 1 à 7, en particulier pour la protection d'objets, notamment pour leur chute ou leur transport.

**15.** Dispositif comportant une pièce selon l'une quelconque des revendications 1 à 7, le dispositif étant choisi parmi un véhicule, notamment automobile ou ferroviaire, un réservoir poreux, une cale et un absorbeur acoustique.

[Fig 1]

[Fig 2]

[Fig 3]

Europäisches
Patentamt

European
Patent Office

Office européen
des brevets

**RAPPORT DE RECHERCHE EUROPEENNE**

Numéro de la demande

EP 22 21 1435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 800 700 A2 (HOWMEDICA OSTEONICS CORP [US]) 27 juin 2007 (2007-06-27) <br> * alinéas [0054], [0064] – [0067], [0087] – [0100] * <br> * tableaux 2-4 * <br> * revendications 1,2,8,9 * <br> * figures 7,9-13 * <br> ----- | 1-13 | INV. <br> B22F10/28 <br> B22F10/31 <br> B22F10/36 <br> B22F10/368 <br> B22F10/38 <br> B22F10/85 <br> B29C64/135 <br> B33Y10/00 <br> B33Y80/00 <br> F16F7/12 |
| X | EP 1 683 593 A2 (HOWMEDICA OSTEONICS CORP [US]) 26 juillet 2006 (2006-07-26) <br> * alinéas [0082] – [0084], [0090] – [0095] * <br> * tableaux 1-3 * <br> * revendications 1,2,4-9 * <br> * figures 3-7 * <br> ----- | 1,4-13 | |
| X | WO 2011/022550 A1 (SMITH & NEPHEW INC [US]; SHARP JEFFREY [US] ET AL.) 24 février 2011 (2011-02-24) <br> * alinéas [0099] – [0101], [0116], [0123] * <br> * revendications 1,7-12,18-22 * <br> * figures 24-29,37-42 * <br> ----- | 1,3-9 | |
| X | WO 2020/208938 A1 (BRIDGESTONE CORP [JP]) 15 octobre 2020 (2020-10-15) <br> * alinéas [0024] – [0027] * <br> * revendications 1-5,13 * <br> ----- | 1,15 | DOMAINES TECHNIQUES RECHERCHES (IPC) <br><br> B22F <br> B29C <br> B33Y <br> F16F |
| X | WO 2021/082277 A1 (SHENYANG RES INSTITUTE OF FOUNDRY CO LTD [CN]) 6 mai 2021 (2021-05-06) <br> * page 3, alinéa 2 * <br> * revendications 1,2,5,12 * <br> * figures 1a,1b * <br><br> -/-- | 1,4-7, 14,15 | |

Le présent rapport a été établi pour toutes les revendications

| Lieu de la recherche | Date d'achèvement de la recherche | Examinateur |
|---|---|---|
| La Haye | 29 mars 2023 | Knoflacher, Andreas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 22 21 1435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,P | & EP 4 052 817 A1 (SHENYANG RES INSTITUTE OF FOUNDRY CO LTD [CN]) 7 septembre 2022 (2022-09-07) * alinéa [0008] * * revendications 1,2,5,12 * * figures 1a,1b * ----- | 1,4-7, 14,15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 29 mars 2023 | Knoflacher, Andreas |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

**EP 22 21 1435**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**29-03-2023**

| Document brevet cité au rapport de recherche | Date de publication | Membre(s) de la famille de brevet(s) | Date de publication |
|---|---|---|---|
| EP 1800700 A2 | 27-06-2007 | AT 480264 T | 15-09-2010 |
| | | AU 2006241341 A1 | 21-06-2007 |
| | | CA 2569773 A1 | 06-06-2007 |
| | | EP 1800700 A2 | 27-06-2007 |
| | | EP 2210623 A1 | 28-07-2010 |
| | | JP 5452840 B2 | 26-03-2014 |
| | | JP 2007262568 A | 11-10-2007 |
| | | US 2007142914 A1 | 21-06-2007 |
| | | US 2010010638 A1 | 14-01-2010 |
| | | US 2014249643 A1 | 04-09-2014 |
| | | US 2018055641 A1 | 01-03-2018 |
| | | US 2020306048 A1 | 01-10-2020 |
| EP 1683593 A2 | 26-07-2006 | AU 2005247021 A1 | 20-07-2006 |
| | | CA 2529884 A1 | 30-06-2006 |
| | | CA 2860188 A1 | 30-06-2006 |
| | | EP 1683593 A2 | 26-07-2006 |
| | | US 2006147332 A1 | 06-07-2006 |
| | | US 2011014081 A1 | 20-01-2011 |
| | | US 2017014235 A1 | 19-01-2017 |
| WO 2011022550 A1 | 24-02-2011 | AU 2010284197 A1 | 08-03-2012 |
| | | AU 2010284207 A1 | 08-03-2012 |
| | | AU 2016202703 A1 | 19-05-2016 |
| | | AU 2016202704 A1 | 19-05-2016 |
| | | AU 2017204550 A1 | 27-07-2017 |
| | | BR 112012003683 A2 | 29-03-2016 |
| | | BR 112012003716 A2 | 05-04-2016 |
| | | CA 2771317 A1 | 24-02-2011 |
| | | CA 2771384 A1 | 24-02-2011 |
| | | CN 102548509 A | 04-07-2012 |
| | | CN 102573704 A | 11-07-2012 |
| | | CN 106730036 A | 31-05-2017 |
| | | EP 2467096 A1 | 27-06-2012 |
| | | EP 2467097 A1 | 27-06-2012 |
| | | EP 3498228 A1 | 19-06-2019 |
| | | JP 5883787 B2 | 15-03-2016 |
| | | JP 5931726 B2 | 08-06-2016 |
| | | JP 6762279 B2 | 30-09-2020 |
| | | JP 2013502283 A | 24-01-2013 |
| | | JP 2013502285 A | 24-01-2013 |
| | | JP 2016026025 A | 12-02-2016 |
| | | JP 2017200630 A | 09-11-2017 |
| | | KR 20120053039 A | 24-05-2012 |
| | | KR 20120065352 A | 20-06-2012 |
| | | RU 2012109229 A | 27-09-2013 |

Pour tout renseignement concernant cette annexe : voir Journal Officiel de l'Office européen des brevets, No.12/82

**page 1 de 2**

EPO FORM P0460

# EP 4 194 126 A1

## ANNEXE AU RAPPORT DE RECHERCHE EUROPEENNE
## RELATIF A LA DEMANDE DE BREVET EUROPEEN NO.

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2023

| Document brevet cité au rapport de recherche | Date de publication | Membre(s) de la famille de brevet(s) | | Date de publication |
|---|---|---|---|---|
| | | RU | 2012109230 A | 27-09-2013 |
| | | US | 2012215310 A1 | 23-08-2012 |
| | | US | 2012232654 A1 | 13-09-2012 |
| | | US | 2017056178 A1 | 02-03-2017 |
| | | US | 2017252165 A1 | 07-09-2017 |
| | | US | 2021186701 A1 | 24-06-2021 |
| | | US | 2023073152 A1 | 09-03-2023 |
| | | WO | 2011022550 A1 | 24-02-2011 |
| | | WO | 2011022560 A1 | 24-02-2011 |
| WO 2020208938 A1 | 15-10-2020 | JP | 2020172212 A | 22-10-2020 |
| | | WO | 2020208938 A1 | 15-10-2020 |
| WO 2021082277 A1 | 06-05-2021 | CN | 112355277 A | 12-02-2021 |
| | | EP | 4052817 A1 | 07-09-2022 |
| | | WO | 2021082277 A1 | 06-05-2021 |

Pour tout renseignement concernant cette annexe : voir Journal Officiel de l'Office européen des brevets, No.12/82

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3033518 A1